(19) Europäisches Patentamt

European Patent Office  (11) Publication number: **0 229 240**

Office européen des brevets  **B1**

(12)  # EUROPEAN PATENT SPECIFICATION

(45) Date of publication of patent specification: **21.02.90**  (51) Int. Cl.⁵: **B 23 Q 1/16, B 23 D 55/00**

(21) Application number: **86114733.8**

(22) Date of filing: **23.10.86**

(54) Jointed arm support for band saws.

(30) Priority: **22.11.85 IT 5947385 u**

(43) Date of publication of application:
**22.07.87 Bulletin 87/30**

(45) Publication of the grant of the patent:
**21.02.90 Bulletin 90/08**

(84) Designated Contracting States:
**AT CH DE FR LI**

(56) References cited:
**DE-A-3 126 555**
**DE-C- 8 794**
**FR-A-2 386 386**
**GB-A- 721 088**
**US-A-2 026 659**
**US-A-2 555 056**
**US-A-2 843 917**

(73) Proprietor: **MODELLERIA DARIO F.LLI s.n.c.**
**Via Calnova 1**
**I-31045 Motta di Livenza (TV) (IT)**

(72) Inventor: **Dario, Mario**
**Via Calnova 1**
**I-31045 Motta Di Livenza (TV) (IT)**

(74) Representative: **D'Agostini, Giovanni, Dr.**
**D'AGOSTINI ORGANIZZAZIONE n. 17 via**
**G.Giusti**
**I-33100 Udine (IT)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention refers to a bandsawing tool movably mounted on a supporting structure.

This innovation has a particular and convenient application to operate with band sawing tools in order to facilitate its use by the operator for sinuous sawings.

Articulated arm supports for support of working tools in order to allow free movement on a working plane of the supported working tool (US—A—2026659, FR—A—2386386, DE—A—3126555), also capable to move the working tool movement plane in different levels (US—A—2026659, FR—A—2386386), are well known, but such supports do not relate to band-sawing technology in particular:

—US—A—2 026 659 discloses an articulated arm adjustable in level by screw means, said articulated arm being of the type having three articulations on a vertical axis, the first engaging a main arm on an upright supporting structure, the second connecting the main arm to a forearm, the third being placed at the respective extremity of the forearm with clamping means to clamp a drilling-tool by clamping it around his body.

—FR—A—2 386 386 discloses an articulated arm for supporting a control-apparatus, having at his extremity an horizontal supporting plate, to allow to support the respective apparatus from below.

Neither of these solutions are connected with or suggest being used for band saw tools.

A mounted band-sawing machine is disclosed in US—A—2 555056, in which the respective sawing device is movable in respect to the fixed supporting structure, by a slidable horizontal double-arm that can be rotated around a column of the fixed supporting structure.

If this last solution solves the problem to saw not easy movable pieces in a desired pathway, it does not provide a compact sawing machine nor an easy structure for the supporting structure and the sawing device, in order to allow the sawing machine to operate in different ways.

The purpose of this invention is to realize an improved bandsawing tool movably mounted on a supporting structure.

According to the characteristics as in the attached claim, this invention solves the problem by a unit comprising a bandsawing-tool and a movable structure for supporting said bandsawing-tool, characterised in that:

—said supporting structure comprises an articulated arm; said articulated arm being of the type having three articulated joints, each hinged about a vertical axis, the first engaging a main arm on an upright supporting structure, the second connecting the main arm to a forearm, the third being placed at the distal extremity of the forearm, and wherein:

—the first hinging support is mounted on an upright colum protruding from said supporting structure, by an intermediate sliding level-adjustable rack means, and wherein

—the third articulated joint of said forearm carries a rotatable horizontal supporting place, structured to support said bandsawing tool from below.

The advantages obtained by this solution consist in allowing an easier movement of the bandsawing tool thus supported, and furthermore the operator has the maximum availability and relative adjustment in the use of the machine itself, thus being able to easily carry out works on beams and cuts on heavy pieces, the band sawing tool being well supported by the respective articulated arm.

The following explanation gives more details of the invention together with the help of the drawings showing the preferred embodiment of the present invention.

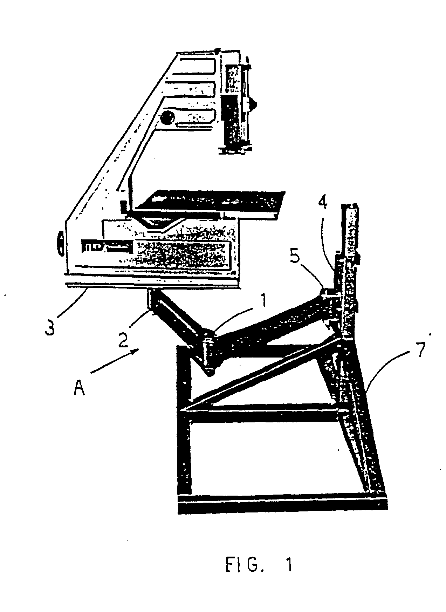

Figure 1 represents a perspective side view of the artuculated arm support in operating conditions supporting the bandsawing tool.

As it can be seen from this figure the articulated arm support is indicated with (A) involving an intermediate joint with a vertical hinge (1) which divides the articulated arm support into a main arm and forearm, the second one supporting at its extremity a rotationally free pivot (2) in which a bandsawing tool supporting plate (3) is hinged, the other extremity of the main arm being hinged (5) and slidable relative to an upright support structure (4) of a base support (7).

The articulated arm (A) supports in a unit a bandsawing tool in order to minimize its space requirements, allowing the bandsawing tool to be utilized either movably on said articulated arm or fixed in position working in one plane.

## Claim

A bandsawing tool movably mounted on a supporting structure characterised in that:

—said supporting structure comprises an articulated arm; said articulated arm being of the type having three articulated joints each hinged about a vertical axis (5, 1, 2), the first engaging a main arm (5) on an upright supporting structure (7), the second (1) connecting the main arm to a forearm, the third (2) being placed at the distal extremity of the forearm and wherein:

—the first hinging support (5) is mounted on a upright column protruding from said supporting structure (7), by an intermediate sliding level-adjustable rack means (4), and wherein

—the third articulated joint (2) of said forearm carries a rotatable horizontal supporting plate (3) structured to support said bandsawing-tool from below.

## Patentanspruch

Die Einrichtung für Bandsäge wird in beweglich Art auf einem Gestell eingebauet, das es von der Tatsache kenngezeichnet wird daß:

—des gennant Gestell einen gelenkig Arm enthaltet; der gelenkig Arm ist der Typ der drei gegliedert Verbindungen hat, jede auf einer senkrecht Achse (5, 1, 2) verbolzt ist, die erste die einen hauptsächlich Arm (5) zuf einem senkrecht Gestell (7) in Anspruch nimmt, die zweite (1) die den hauptsächlich Arm mit einem Unterarm verbindet, die dritte (2) die am entfern Ende des Unterarmgesetzt wird, und in das:

—der erste Halter des Verbindung (5) auf einen senkrecht Säule eingebauet wird, die Säule vorspringt sich von dem gennant Gestell (7) durch ein mittlere Mittel mit gleitend Zahnstanger des Regulierung in der Höhe (4), und in das:

—die dritte geglieder Verbindung (2) des gennant Unterarm eine waagerecht rollend Fläche des Halter (3) trägt, die sie gegliedert ist derart sie von unten die gennant Einrichtung für Bandsäge trägt.

**Revendication**

Dispositif pour scie à ruban, monté mobilement dans une structure de support, caractérisé en ce que:

—la dite structure de support comporte un bras articulable; dit bras articulable ayant trois jointures articulées, chacune charnièrèe dans un axe vertical (5, 1, 2), la première engageant un bras deuxième (1) reliant le bras principal avec un avant-bras la troisième (2) dans l'extrémité distale de dit avant-bras, et ayant:

—le premier support articulé (5) monté dans une colonne perpendiculaire proèminent de dite structure de support (7), par un moyen intermédiaire à crémaillère reglable dans la hauter (4), et ayant:

—la troisième jointure articulée (2) de dit avant-bras portant un plan horizontal de support tournant (3), structuré de façon de soutenir dit dispositif pour scie à ruban de dessous.

FIG. 1

1